# EUROPEAN PATENT SPECIFICATION

(11) **EP 1 995 080 B1**
(45) Date of publication and mention of the grant of the patent: **11.01.2012**
(21) Application number: 08155277.0
(22) Date of filing: 28.04.2008
(51) Int. Cl.: B60C 11/01

(54) **Pneumatic tire**
Luftreifen
Pneu

(30) Priority: 03.05.2007 US 799877
(43) Date of publication of application: 26.11.2008
(73) Proprietor: The Goodyear Tire & Rubber Company, Akron, OH 44316-0001 (US)
(72) Inventor: Maxwell, Paul Bryan, Kent, OH 44240 (US); Shondel, Jonathan James, Massillon, OH 44646 (US)
(74) Representative: Kutsch, Bernd

(56) References cited:
- DE-A1- 4 000 339
- FR-A- 2 237 771
- JP-A- 11 291 718
- JP-A- 63 297 108
- JP-A- 2003 211 915
- JP-A- 2005 329 795
- JP-A- 2006 027 498
- US-B1- 6 533 007

## Description

### Field of the Invention

The present invention is directed to a pneumatic tire. More specifically, the present invention is directed to a pneumatic tire with improved water and traction characteristics.

### Background of the Invention

In a conventional tire for typical use as on a passenger car or light truck, the tire tread is provided with a series of grooves, either circumferentially or laterally extending, or a combination of both, to form a plurality of blocks.

The goals of a tire during winter driving condition are to maintain good contact with the road, while providing for enhanced traction. However, since enhanced traction is best achieved by providing most biting edges to the tread pattern, while road contact is achieved by providing more surface area for tread contact, these goals are often conflicting.

JP-A -2005-329795 and JP-A- 2006-027498 each disclose a tire comprising a circumferentially spaced set of raised ribs in the tire shoulders wherein each set of ribs comprises a plurality of ribs extending in the axial direction relative to an axis of rotation of the tire.

### Summary of the Invention

The present invention is directed to a tire according to claim 1 with a tread designed for achieving the goals of enhanced traction with excellent wet performance.

Dependent claims refer to preferred embodiments of the invention.

In one aspect of the invention, the tire tread has a pair of opposing outer rows of tread blocks. Shoulder block extensions extend from the blocks of the outer row of tread blocks into the adjacent tire shoulder. A set of raised ribs is located in each shoulder block extension.

The tire is provided with two sets of ribs, the alternating sets of raised ribs are preferably inclined in opposing directions and the alternating sets of raised ribs may have different numbers of ribs in each set.

### Brief Description of the Drawings

The invention will be described by way of example and with reference to the accompanying drawings in which:
FIG. 1 illustrates a tire having a tread in accordance with the present invention;

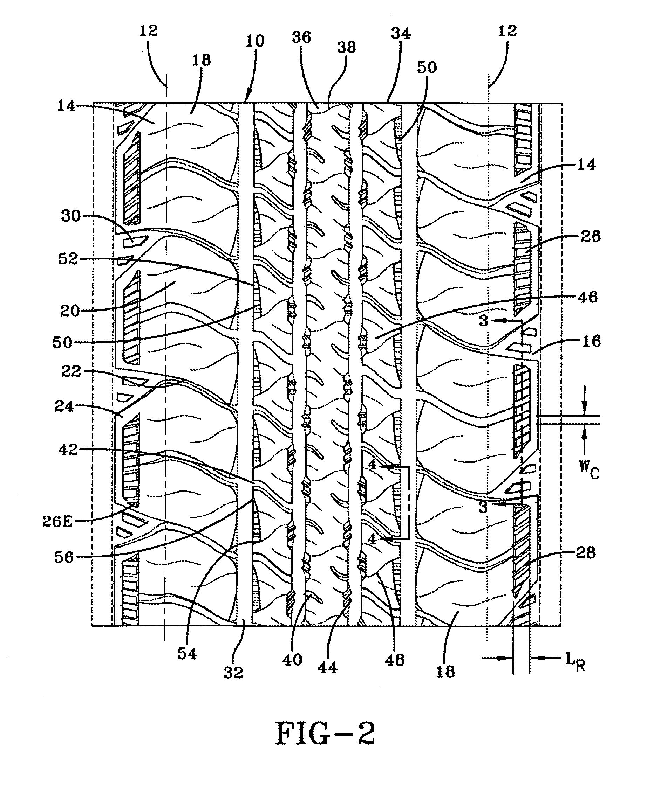

FIG. 2 is front plane view of the tire tread and upper shoulders of a tire;
FIG. 3 is cross-sectional view along line 3-3 of FIG. 2, showing the upper shoulder tire area; and
FIG. 4 is a cross-sectional view along line 4-4 of FIG. 2, showing the lateral side of the intermediate tread blocks.

### Detailed Description of the Invention

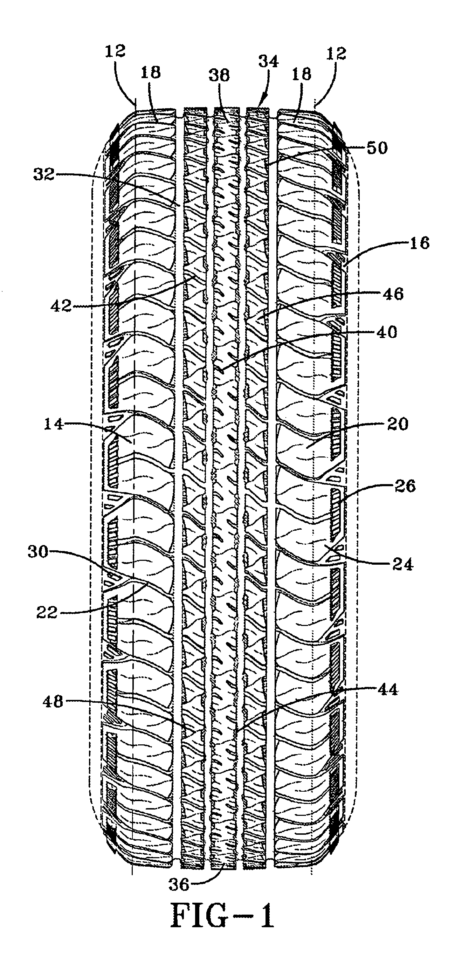

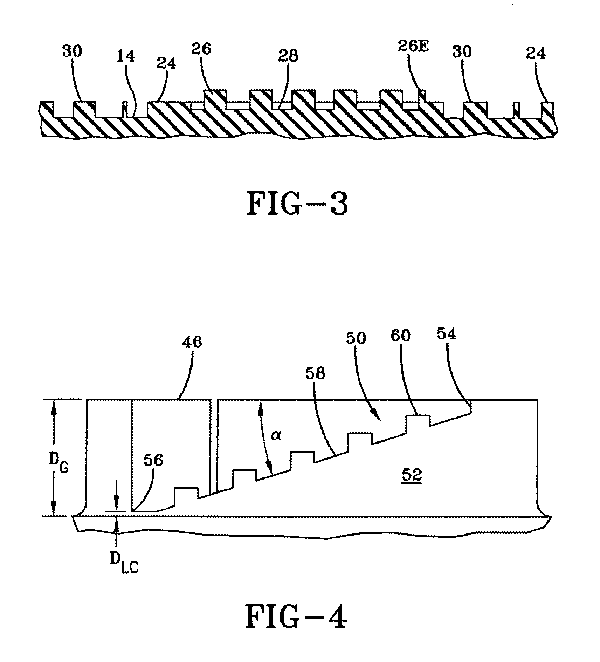

FIG. 1 is a tire with a tread and shoulders in accordance with the present invention. The tire has a tread 10 located between a pair of opposing tread edges 12; axially outward of the tread edges 12 are the opposing tire shoulders 14. The shoulders 14 extend into and merge with the tire sidewalls 16. The illustrated tread 10 is intended for use on a passenger vehicle tire or a light truck tire, but features in the tread may be used individually or collectively for these or other types of tires. The tread 10 has a pair of opposing outer tread rows 18, each outer tread row having circumferentially adjacent blocks 20 separated by lateral grooves 22. Pairs of circumferentially adjacent blocks 20 are associated together by means of an upper shoulder extension 24. Each upper shoulder extension 24 has a raised height over the shoulder 14 of the tire, creating tread-like elements in the upper shoulder, see also FIG. 3.

Located within each upper shoulder extension 24 is a set of raised ribs. The individual ribs 26 extend in an axial direction relative to the axis of rotation of the tire so that the width W_{c} of the rib 26 in the tire circumferential direction is less than the length L_{R} of the rib 26 in the tire radial direction. Due to their position in the upper shoulder extension, the ribs in the set of ribs 24 also extend to some extend in the radial direction of the tire.

The length L_{R} of the ribs 26 within the set may vary; in the illustrated set, the end ribs 26E are shorter relative to the remaining ribs 26. The raised ribs 26 have a height, above the surface of the upper sidewall extension, of at least one quarter of the height of the upper sidewall extension, or as measured from the surface of the upper sidewall extension to the outer surface of the rib, the ribs have a height of 1.0 to 20 mm, or 2.0 to 15 mm, such as from 3.0 mm to 10 mm. To provide more tread surface to assist in traction, the spacing 28 between the ribs 26 may be recessed or have a negative depth relative to the surface of the upper sidewall extension 24. The illustrated recessed depth between the ribs is approximately equal to the depth of the lateral grooves 22 in the outer tread rows 18, thought the recessed depth may vary and be greater or less than the lateral groove depth.

Each set of raised ribs 26 in a single shoulder extension 24 preferably has at least 3 raised ribs 26 but preferably not more than ten ribs 26. Preferably, the number of ribs 26 is between 3 and 8 such as 4 to 7.

All of the ribs 26 in the set of ribs are preferably inclined at the same angle in the range of 0° to 20°, alternatively in a range from 5° to 20°, preferably 5° to 15°, in either direction relative to the axial direction relative to the axis of rotation of the tire. The ribs 26 create additional traction characteristics for the tire shoulder 14.

Located between the shoulder extensions 24, and within an extension of some of the lateral grooves 22 of the outer tread rows, is a second set of raised ribs 30. This second set of raised ribs 30 may be formed with some features identical to the first set of ribs 26, i.e., having the same number of ribs, the same radial length, the same height, or the same inclination direction. In the illustrated second set of ribs 30, there are two ribs 30 in each set, but it may also be 3 to 5 ribs 30. The ribs 30 within the set are preferably parallel to one another, and are inclined at an angle in the range of 0°to 20°, alternatively 5° to 20° such as 5° to 15°, relative to the axial direction, but preferably in a direction opposite of the ribs 26 in the first set of raised ribs 26. The ribs 30 in the second set have a length in the tire radial direction greater than the width in the tire circumferential direction. The illustrated ribs 30 have different lengths in the axial direction; for these ribs, the rib length is determined so that a desired spacing is maintained between the upper edge of the ribs and the adjacent shoulder extension 24. Due to their location in the upper shoulder extension 24, the ribs in the second set of ribs 30 also extend to some extend in the radial direction of the tire.

In the central portion of the tread 10, the tire tread has four circumferential grooves 32, the grooves 32 delineating the shoulder rows 18, two intermediate tread rows 34, and a center tread row 36. The illustrated circumferential grooves 32 have an essentially straight configuration, this essentially straight configuration defined as being able to draw a line parallel to the tire equatorial plane through the center of the groove without the drawn line contacting the sides of any of the tread elements.

The center tread row 36 is a continuous rib having a plurality of sipes 38 extending between the circumferential grooves 32, creating a block-type appearance. However, as the sipes 38 close upon ground contact, the characteristics of a central tread rib are maintained. The quasi-block created between circumferentially adjacent sipes has at least one blind groove 40 on each lateral side of the quasi-block. The blind grooves 40 are substantially aligned with the lateral grooves 42 in the intermediate tread rows 34.

Along each lateral side of the quasi-block are traction divots 44. A traction divot 44 is a negative space created in the tread element, similar to a groove, but of a very limited extent into the tread element. The divots 44 have an axial extent into the quasi-blocks of not more than 20%, alternatively 5% to 15%, of the quasi-block width as measured perpendicular to the tire equatorial plane. On each lateral side of the quasi-block there is at least one, but not more than ten traction divots 44, alternatively two to five divots 44; illustrated are three divots 44. The traction divots 44 have a depth extending the full height of the tread groove depth. To maintain a uni-directional tread configuration, the traction divots 44 on each lateral side of the tread are inverse mirror-images of each other.

The intermediate tread rows 34 are a plurality of tread blocks 46 separated by the inclined lateral grooves 42. Each block 46 is divided by a sipe 48 extending between the circumferential grooves 32. On the axially inner side of each block, relative to the tire centerplane, are traction divots 44. On the axially outer side of each block, relative to the equatorial plane, and within the boundaries of the block, is a toothed chamfer 50 extending in the circumferential direction. The boundaries of the block 46 are defined by the adjacent grooves 32, 42 and the intersection of the block walls and the grooves. For the illustrated tire, the lateral boundaries of the block 46 are defined by the straight circumferential grooves and the block walls 52, creating lateral boundaries parallel to the tire centerplane. When the tread 10 and chamfer 50 are viewed from above, the axially inner edge of the chamfer 50 is curved into the tread block 46 while the axially outer edge of the chamfer 50 is aligned with the non-chamfered portion of the tread block. This results in the chamfer 50 being fully within the boundaries of the tread block 46.

Each chamfer 50 has an initiation point 54 and a termination point 56. The initiation point 54 is the radially outermost point of the chamfer 50 and may be coincident with the tread surface. The termination point 56 is the radially innermost point of the chamfer 50 and may be located at any radial height D_{LC} in the range of zero to 70%, alternatively by 10% to 50%, of the tread block height D_{G}, see FIG. 4.

The chamfer 50 has a radially outer surface 58 that extends from the initiation point 54 and the termination point 56. As the termination point 56 is below the initial tread surface, the chamfer radially outer surface 58 is either inclined or sloped downward. The chamfer 50 has at least one indentation 60 in the radially outer surface 58, see FIG. 4. The indentation 60 creates additional edges to the chamfer 50 and tread block 46, increasing the traction properties of the tire in both mud and snow conditions.

The illustrated tire and tread has enhanced traction characteristics and provides an aggressive appearance to the tire, conveying to an end user the traction benefits of the tread.

## Claims

1. A pneumatic tire, the tire comprising a ground contacting tread (10), the tread (10) being located between a pair of opposing tire shoulders (14), the tire shoulders (14) comprising circumferentially spaced sets of raised ribs (26, 30), each set of raised ribs comprising two to ten ribs (26, 30), each rib (26, 30) extending in the axial direction relative to an axis of rotation of the tire, **characterized in that** the tire has two alternating sets of raised ribs (26, 30) in the shoulders (14) arranged about the circumferential length of the tire shoulders (14), namely a first set of raised ribs (26) and a second set of raised ribs (30), wherein in top view onto the tread surface and projecting the surface of the raised ribs (26, 30) into the tread surface, the first set of raised ribs (26) alternates with the second set of raised ribs (30) along a circumferential line in the tread surface, and wherein
(i) in top view onto the tread surface and projecting the surface of the raised ribs (26) into the tread surface, the respective projections of the two alternating sets of raised ribs (26, 30) are inclined in opposing directions relative to the axial direction, or
(ii) the tread (10) has a pair of opposing outer tread rows (18), each of the rows (18) having circumferentially adjacent blocks (20) separated by lateral grooves (22) wherein upper shoulder extensions (24) extend from the blocks (20) into the adjacent tire shoulder (14), wherein the lateral grooves (22) extend into the adjacent tire shoulder (14) , the first set of raised ribs (26) being located in the upper shoulder extension (24) and the second set of raised ribs (30) being located between the upper shoulder extensions (24) and within the extension of the lateral grooves (22), the two alternating sets of raised ribs (26, 30) having different numbers of ribs in each set.

2. The tire of claim 1 wherein in case of option (i) the tread (10) has a pair of opposing outer tread rows (18), each of the rows (18) having circumferentially adjacent blocks (20) separated by lateral grooves (22) wherein upper shoulder extensions (24) extend from the blocks (20) into the adjacent tire shoulder (14), wherein the lateral grooves (22) extend into the adjacent tire shoulder (14) the first set of raised ribs (26) being located in the upper shoulder extension (24) and the second set of raised ribs (30) being located between the upper shoulder extensions (24) and within the extension of the lateral grooves (22).

3. The tire of claim 1 wherein in case of option (ii) and in top view onto the tread surface and projecting the surface of the raised ribs (26) into the tread surface, the respective projections of the two alternating sets of raised ribs (26, 30) are inclined in opposing directions relative to the axial direction,

4. The tire of at least one of the previous claims wherein the ribs in the set of raised ribs (26, 30) have a width in the tire circumferential direction less than the length in the tire axial direction.

5. The tire of at least one of the previous claims wherein the ribs (26, 30) in the set of raised ribs have a height, as measured from the base of the rib to the outermost surface thereof, in the range of 1.0 mm to 20 mm, alternatively 2.0 mm to 10 mm.

6. The tire of claim 5 wherein the height is in a range of from 2.0 mm to 5.0 mm.

7. The tire of at least one of the previous claims wherein the ribs (26, 30) in the set of raised ribs are inclined at an angle of 0° to 20° from an axial direction relative to the axis of rotation of the tire.

8. The tire of claim 7 wherein the ribs (26, 30) in the set of raised ribs are inclined at an angle of 5° to 20° from an axial direction relative to the axis of rotation of the tire.

9. The tire of claim 7 wherein the ribs (26, 30) in the set of raised ribs are inclined at an angle of 5° to 15° from an axial direction relative to the axis of rotation of the tire.

10. The tire of claim 2 wherein the two alternating sets of raised ribs (26, 30) have different numbers of ribs in each set.

## Patentansprüche

1. Luftreifen, wobei der Reifen eine mit dem Boden in Kontakt kommende Lauffläche (10) umfasst, wobei sich die Lauffläche (10) zwischen einem Paar einander gegenüberliegender Reifenschultern (14) befindet, wobei die Reifenschultern (14) in Umfangsrichtung beabstandete Sätze erhabener Rippen (26, 30) umfassen, wobei jeder Satz erhabener Rippen zwei bis zehn Rippen (26, 30) umfasst, wobei jede Rippe (26, 30) sich bezüglich einer Rotationsachse des Reifens in axialer Richtung erstreckt, **dadurch gekennzeichnet, dass** der Reifen zwei alternierende Sätze erhabener Rippen (26, 30) in den Schultern (14) aufweist, die über die Umfangslänge der Reifenschultern (14) angeordnet sind, nämlich einen ersten Satz erhabener Rippen (26) und einen zweiten Satz erhabener Rippen (30), wobei, in Draufsicht auf die Profilfläche und unter Projektion der Oberfläche der erhabenen Rippen (26, 30) in die Profilfläche, der erste Satz erhabener Rippen (26) mit dem zweiten Satz erhabener Rippen (30) entlang einer Umfangslinie in der Profilfläche alterniert, und wobei
(i) in Draufsicht auf die Profilfläche und unter Projektion der Oberfläche der erhabenen Rippen (26) in die Profilfläche, die jeweiligen Projektionen der zwei alternierenden Sätze erhabener Rippen (26, 30) bezüglich der axialen Richtung in entgegengesetzte Richtungen geneigt sind, oder
(ii) die Lauffläche (10) ein Paar einander entgegengesetzter äußerer Profilreihen (18) aufweist, wobei jede der Reihen (18) in Umfangsrichtung benachbarte Blöcke (20) aufweist, die durch in seitlicher Richtung verlaufende Rillen (22) getrennt sind, wobei obere Schulterverlängerungen (24) sich von den Blöcken (20) in die benachbarte Reifenschulter (14) erstrecken, wobei die in seitlicher Richtung verlaufenden Rillen (22) sich in die benachbarte Reifenschulter (14) erstrecken, wobei der erste Satz erhabener Rippen (26) sich in der oberen Schulterverlängerung (24) befindet und der zweite Satz erhabener Rippen (30) sich zwischen den oberen Schulterverlängerungen (24) und innerhalb der Verlängerung der in seitlicher Richtung verlaufenden Rillen (22) befindet, wobei die zwei alternierenden Sätze erhabener Rippen (26, 30) verschiedene Anzahlen von Rippen in jedem Satz aufweisen.

2. Reifen nach Anspruch 1, wobei im Fall von Option (i) die Lauffläche (10) ein Paar einander entgegengesetzter äußerer Profilreihen (18) aufweist, wobei jede der Reihen (18) in Umfangsrichtung benachbarte Blöcke (20) aufweist, die durch in seitlicher Richtung verlaufende Rillen (22) getrennt sind, wobei obere Schulterverlängerungen (24) sich von den Blöcken (20) in die benachbarte Reifenschulter (14) erstrecken, wobei die in seitlicher Richtung verlaufenden Rillen (22) sich in die benachbarte Reifenschulter (14) erstrecken, wobei der erste Satz erhabener Rippen (26) sich in der oberen Schulterverlängerung (24) befindet und der zweite Satz erhabener Rippen (30) sich zwischen den oberen Schulterverlängerungen (24) und innerhalb der Verlängerung der in seitlicher Richtung verlaufenden Rillen (22) befindet.

3. Reifen nach Anspruch 1, wobei im Fall von Option (ii) und in Draufsicht auf die Profilfläche und unter Projektion der Oberfläche der erhabenen Rippen (26) in die Profilfläche, die jeweiligen Projektionen der zwei alternierenden Sätze erhabener Rippen (26, 30) bezüglich der axialen Richtung in entgegengesetzte Richtungen geneigt sind.

4. Reifen nach mindestens einem der vorgenannten Ansprüche, wobei die Rippen in dem Satz erhabener Rippen (26, 30) eine Breite in Reifenumfangsrichtung haben, die kleiner als die Länge in der axialen Reifenrichtung ist.

5. Reifen nach mindestens einem der vorgenannten Ansprüche, wobei die Rippen (26, 30) in dem Satz erhabener Rippen eine Höhe, gemessen ab der Basis der Rippen bis zu der äußersten Oberfläche davon, im Bereich von 1,0 mm bis 20 mm, alternativ 2,0 mm bis 10 mm, aufweisen.

6. Reifen nach Anspruch 5, wobei die Höhe in einem Bereich von 2,0 mm bis 5,0 mm liegt.

7. Reifen nach mindestens einem der vorgenannten Ansprüche, wobei die Rippen (26, 30) in dem Satz erhabener Rippen in einem Winkel von 0°bis 20° von einer axialen Richtung in Bezug auf die Rotationsachse des Reifens geneigt sind.

8. Reifen nach Anspruch 7, wobei die Rippen (26, 30) in dem Satz erhabener Rippen in einem Winkel von 5° bis 20° von einer axialen Richtung in Bezug auf die Rotationsachse des Reifens geneigt sind.

9. Reifen nach Anspruch 7, wobei die Rippen (26, 30) in dem Satz erhabener Rippen in einem Winkel von 5° bis 15° von einer axialen Richtung in Bezug auf die Rotationsachse des Reifens geneigt sind.

10. Reifen nach Anspruch 2, wobei die zwei alternierenden Sätze erhabener Rippen (26, 30) verschiedene Anzahlen von Rippen in jedem Satz aufweisen.

## Revendications

1. Bandage pneumatique, le bandage pneumatique comprenant une bande de roulement (10) entrant en contact avec le sol, la bande de roulement (10) étant située entre une paire d'épaulements opposés de bandage pneumatique (14), les épaulements (14) du bandage pneumatique comprenant des jeux, espacés en direction circonférentielle, de nervures surélevées (26, 30), chaque jeu de nervures surélevées comprenant de deux à dix nervures (26, 30), chaque nervure (26, 30) s'étendant dans la direction axiale par rapport à l'axe de rotation du bandage pneumatique, **caractérisé en ce que** le bandage pneumatique possède deux jeux alternés de nervures surélevées (26, 30) dans les épaulements (14), qui sont arrangés sur la longueur de circonférentielle des épaulements (14) du bandage pneumatique, plus précisément un premier jeu de nervures surélevées (26) et un deuxième jeu de nervures surélevées (30), dans une vue de sommet de la surface de bande de roulement et qui projette la surface des nervures surélevées (26, 30) dans la surface de bande de roulement, le premier jeu de nervures surélevées (26) alternant avec le deuxième jeu de nervures surélevées (30) le long d'une ligne de circonférentielle dans la surface de bande de roulement, et dans lequel :
(i) dans une vue de sommet sur la surface de bande de roulement et qui projette la surface des nervures surélevées (26) dans la surface de bande de roulement, les projections respectives des deux jeux alternés de nervures surélevées (26, 30) sont inclinées dans des directions opposées par rapport à la direction axiale ; ou
(ii) la bande de roulement 10 possèdent une paire de rangs externes opposés (18) de bande de roulement, chacun des rangs (18) possédant des blocs (20) adjacents en direction circonférentielle qui sont séparés par des rainures latérales (22), des prolongements (24) de l'épaulement supérieur s'étendant à partir des blocs (20) jusque dans l'épaulement adjacent (14) du bandage pneumatique, les rainures latérales (22) s'étendant jusque dans l'épaulement adjacent (14) du bandage pneumatique, le premier jeu de nervures surélevées (26) étant disposé dans le prolongement (24) de l'épaulement supérieur et le deuxième jeu de nervures surélevées (30) étant disposé entre les prolongements (24) de l'épaulement supérieur et dans la portée des rainures latérales (22), les deux jeux alternés de nervures surélevées (26, 30) possédant des nombres différents de nervures dans chaque jeu.

2. Bandage pneumatique selon la revendication 1, dans lequel, dans le cas de l'option (i), la bande de roulement (10) possède une paire de rangs externes opposés de bande de roulement (18) chacun des rangs (18) possédant des blocs (20) adjacents en direction circonférentielle qui sont séparés par des rainures latérales (22), des prolongements (24) de l'épaulement supérieur s'étendant à partir des blocs (20) jusque dans l'épaulement adjacent (14) du bandage pneumatique, les rainures latérales (22) s'étendant jusque dans l'épaulement adjacent (14) du bandage pneumatique, le premier jeu de nervures surélevées (26) étant disposé dans le prolongement (24) de l'épaulement supérieur et le deuxième jeu de nervures surélevées (30) étant disposé entre les prolongements (24) de l'épaulement supérieur et dans la portée des rainures latérales (22).

3. Bandage pneumatique selon la revendication 1, dans lequel, dans le cas de l'option (ii), et dans une vue de sommet sur la surface de bande de roulement et qui projette la surface des nervures surélevées (26) dans la surface de bande de roulement, les projections respectives des deux jeux alternés de nervures surélevées (26, 30) sont inclinées dans des directions opposées par rapport à la direction axiale.

4. Bandage pneumatique selon au moins une des revendications précédentes, dans lequel les nervures dans le jeu de nervures surélevées (26, 30) possèdent une largeur dans la direction circonférentielle du bandage pneumatique, qui est inférieure à la longueur dans la direction axiale du bandage pneumatique.

5. Bandage pneumatique selon au moins une des revendications précédentes, dans lequel les nervures dans le jeu de nervures surélevées (26, 30) possèdent une hauteur, telle qu'on la mesure à partir de la base de la nervure jusqu'à la surface la plus externe de cette dernière, qui se situe dans la plage de 1,0 mm à 20 mm, en variante de 2,0 mm à 10 mm.

6. Bandage pneumatique selon la revendication 5, dans lequel la hauteur se situe dans la plage de 2,0 mm à 5,0 mm.

7. Bandage pneumatique selon au moins une des revendications précédentes, dans lequel les nervures dans le jeu de nervures surélevées (26, 30) sont inclinées en formant un angle de 0° à 20° en direction axiale par rapport à l'axe de rotation du bandage pneumatique.

8. Bandage pneumatique selon la revendication 7, dans lequel les nervures dans le jeu de nervures surélevées (26, 30) sont inclinées en formant un angle de 5° à 20° en direction axiale par rapport à l'axe de rotation du bandage pneumatique.

9. Bandage pneumatique selon la revendication 7, dans lequel les nervures dans le jeu de nervures surélevées (26, 30) sont inclinées en formant un angle de 5° à 15° en direction axiale par rapport à l'axe de rotation du bandage pneumatique.

10. Bandage pneumatique selon la revendication 2, dans lequel les deux jeux alternés de nervures surélevées (26, 30) possèdent des nombres différents de nervures dans chaque jeu.
